Europäisches Patentamt

European Patent Office

Office européen des brevets

(11) Numéro de publication : **0 449 691 A1**

# (12) DEMANDE DE BREVET EUROPEEN

(21) Numéro de dépôt : 91400669.7

(22) Date de dépôt : 12.03.91

(51) Int. Cl.⁵ : **G06K 19/077, H01L 23/498**

(30) Priorité : 28.03.90 FR 9003940

(43) Date de publication de la demande :
02.10.91 Bulletin 91/40

(84) Etats contractants désignés :
DE ES GB IT

(71) Demandeur : SCHLUMBERGER INDUSTRIES
50, avenue Jean Jaurès
F-92120 Montrouge (FR)

(72) Inventeur : Munch, Roger
28 rue de la Forêt, Bigeonnette
F-28170 Chateauneuf en Thymeuraies (FR)
Inventeur : Le Gall, Jean-François
4 avenue de la Belle Heaumière
F-95800 Cergy (FR)
Inventeur : Rose, René
15 rue de l'Etang
F-78190 Voisin le Bretonneux (FR)

(74) Mandataire : Dronne, Guy et al
Cabinet BEAU de LOMENIE, 55, rue
d'Amsterdam
F-75008 Paris (FR)

(54) **Procédé de fabrication d'une carte à mémoire électronique.**

(57)     L'invention concerne un procédé de fixation du module (14) électronique sur le corps (10) d'une carte à mémoire électronique. Le procédé consiste à plonger dans un récipient (40) contenant un matériau adhésif (42), un outil (44) de tamponnage comportant plusieurs pointes (50). Les gouttes de matériau adhésif (42) qui se forment aux extrémités des pointes (50) sont transférées sur le corps (10) de la carte en appliquant l'outil (44) sur celui-ci.

## FIG.2

EP 0 449 691 A1

La présente invention concerne un procédé de fabrication d'une carte à mémoire électronique.

De façon plus précise, parmi les étapes du procédé de fabrication d'une telle carte, l'invention concerne celle qui consiste à fixer le module électronique sur le corps de la carte. En effet, il est bien connu qu'une carte à mémoire électronique, du type conforme à la norme ISO, comporte un corps de carte réalisé en matériau plastique et un module électronique qui se compose, en général, d'un circuit imprimé ou similaire dont une face constitue les contacts électriques externes de la carte et dont l'autre face reçoit la pastille semi-conductrice dans laquelle sont formés les circuits électroniques de la carte. En général on ménage dans le corps de la carte une cavité dont les dimensions sont proches de celles d'un module électronique, et on fixe le module électronique dans la cavité du corps de carte à l'aide d'un matériau adhésif.

Compte tenu du fait que la cavité et le module électronique ont des dimensions relativement proches, il est nécessaire de doser avec précision la quantité de matériau adhésif utilisée pour assurer un collage suffisant tout en évitant une remontée de matériau adhésif qui serait due à un excès de ce matériau.

Afin d'assurer un dosage correct de la quantité de matériau adhésif on a proposé d'utiliser des micro-seringues pour déposer dans la cavité, aux endroits convenables, le matériau adhésif. Cette technique permet effectivement d'obtenir un dosage précis mais l'inconvénient est que l'aiguille de la micro-seringue a un diamètre très faible. Il en résulte que la micro-seringue a tendance à se boucher progressivement, ce qui est très gênant en particulier dans le cas d'une chaîne automatisée de fixation du module électronique sur le corps de la carte.

Un objet de l'invention est de fournir un procédé de fabrication de cartes à mémoire électronique dans lequel l'étape de dépôt du matériau adhésif dans la cavité du corps de carte ne présente pas les inconvénients rappelés ci-dessus.

Pour atteindre ce but, selon l'invention, le procédé de fabrication d'une carte à mémoire électronique se caractérise en ce qu'il comprend les étapes suivantes :

On fournit un corps de carte présentant une cavité pour recevoir un module électronique,

On fournit un outil de tamponnage présentant au moins une tige se terminant par une extrémité libre;

On plonge temporairement l'extrémité de ladite tige dans un matériau adhésif présentant une viscosité suffisante et on retire ladite extrémité de telle manière que du matériau adhésif reste sur ladite extrémité par tension superficielle;

On applique l'extrémité de ladite tige sur une partie convenable de la paroi de ladite cavité pour que le matériau adhésif passe de ladite extrémité à ladite paroi;

On fournit un module électronique présentant une face externe et une face interne comportant une zone de fixation; et

On place ledit module dans ladite cavité pour que ladite zone de fixation soit en regard dudit matériau adhésif.

L'invention sera mieux comprise à la lecture de la description qui suit d'un mode préféré de mise en oeuvre de l'invention donné à titre d'exemple non limitatif. La description se réfère au dessin annexé sur lequel :

La figure 1 montre une partie d'un corps de carte et un module électronique;

La figure 2 illustre de façon globale la mise en oeuvre du procédé de fixation du module;

La figure 3 montre la formation d'une goutte de colle à l'extrémité d'une pointe d'un premier mode de réalisation de l'outil de tamponnage;

Les figures 4 et 5 montrent en détails un deuxième mode de réalisation de l'outil de tamponnage; et

la figure 6 montre en vue de dessus une partie d'un corps de carte sur lequel le matériau adhésif a été déposé conformément au procédé de l'invention.

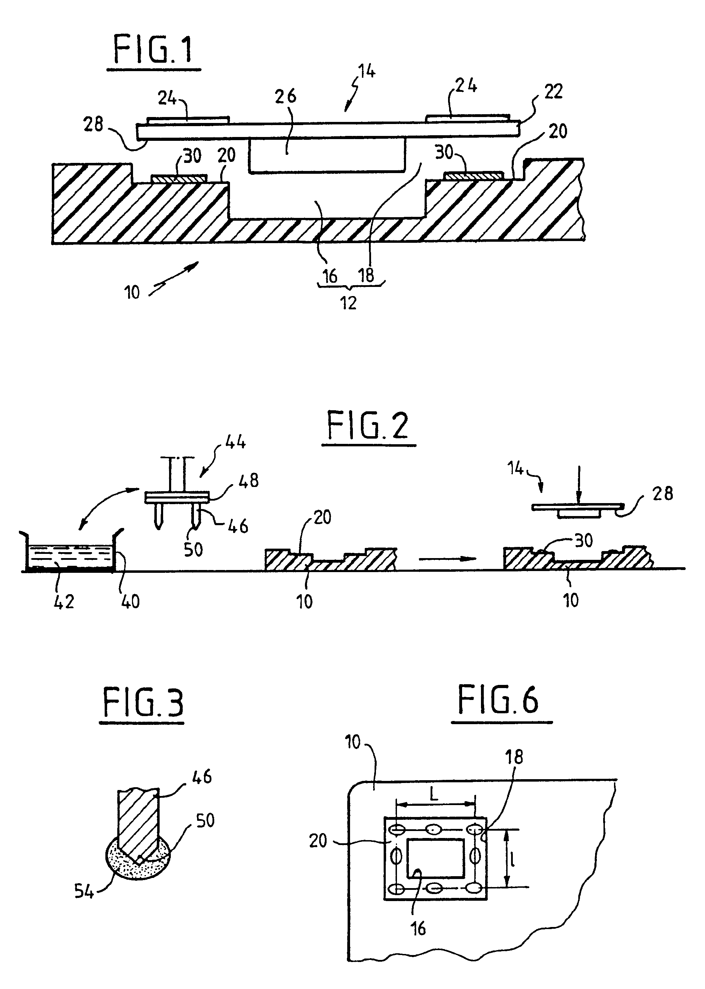

En se référant tout d'abord à la figure 1 on comprendra mieux le problème à résoudre. Le corps de carte 10 est muni d'une cavité 12 pour la mise en place du module électronique 14. La cavité 12 est étagée c'est à dire qu'elle comprend un logement inférieur 16 qui a des dimensions réduites et un logement supérieur 18 de plus grandes dimensions qui débouche dans la face supérieure du corps de carte. La partie restante 20 du fond du logement supérieur 18 forme donc un épaulement parallèle à la face supérieure du corps de carte. Le module électronique 14 comprend essentiellement un élement de circuit imprimé 22 portant sur une de ses faces les plages externes 24 de contact électrique et, sur son autre face, une puce en matériau semi-conducteur reliée aux plages externes 24 et enrobée dans un matériau isolant 26. Il existe un très grand nombre de techniques pour réaliser le module électronique notamment celles qui sont décrites dans les brevets français 2.547 440 ou 2.555.780 ou encore la demande de brevet européen 254.640. Pour les besoins de la description de la présente invention il suffit de retenir que l'enrobage 26 ne recouvre pas toute la face inférieure du circuit imprimé 22 mais laisse libre une zone périphérique 28 de fixation. On comprend que, lorsque le module électronique 14 est mis en place dans la cavité 12, l'enrobage pénètre dans le logement supérieur 18 et la zone périphérique 28 du circuit vient en contact avec l'épaulement 20 du corps de carte.

Le procédé le plus simple pour fixer le module électronique 14 sur le corps de carte 10 consiste à appliquer un matériau adhésif 30 sur l'épaulement 28, ou éventuellement sur la zone périphérique 28, à mettre en place le module électronique 14 dans la cavité 12 et à faire polymériser le matériau adhésif. Il faut bien sûr que la quantité de matériau adhésif soit contrôlée de façon précise pourqu'il y ait suffisamment de matériau adhésif et qu'il soit régulièrement réparti afin d'obtenir un bon collage et pour qu'il n'y ait pas trop de matériau adhésif ce qui entrainerait des remontées de matériau adhésif sur la face supérieure du module électronique ou du corps de carte lors de la mise en place du module électronique.

En se reportant à la figure 2 on va décrire le procédé de fixation selon l'invention.

Le procédé consiste à prélever dans un récipient 40 contenant le matériau adhésif 42 à l'aide d'un outil de tamponnage 44 des quantités convenables de matériau adhésif et à les déposer aux endroits convenables de l'épaulement 20 du corps de carte 10. L'outil de tamponnage 44 comporte une pluralité de tiges 46 faisant saillie hors du corps 48 de l'outil 44 et qui se terminent chacune par une pointe 50. Il y a de préférence huit tiges 46 qui sont disposées aux sommets et sur les cotés d'un rectangle ayant les dimensions de la région médiane de l'épaulement 20.

On fait pénétrer dans le matériau adhésif 42 l'extrémité des tiges 46. Lorsqu'on sort les tiges 46 hors du matériau adhésif, il se forme sur les pointes 50 des tiges 46 une goutte 54 de matériau adhésif par capillarité. Le niveau de matériau adhésif dans le récipient 40 est maintenu à un niveau sensiblement constant de telle manière que l'enfoncement des extrémités des tiges dans le matériau adhésif soit également sensiblement constant ainsi que la quantité de matériau formant chaque goutte 54 est également sensiblement constante. Puis l'outil est mis en place au dessus de la cavité 12 du corps de carte de telle manière que les extrémités 50 des tiges 46 occupent des positions convenables par rapport à l'épaulement 20. On applique les extrémités 50 sur l'épaulement 20. Par différence de tensions superficielles entre le matériau formant les tiges et le matériau formant le corps de carte les gouttes formées aux extrémités des tiges 46 restent sur la surface de l'épaulement 20. Il n'y a plus alors qu'à mettre en place dans la cavité 12 le module électronique 14 et à provoquer la polymérisation du matériau adhésif.

La figure 6 montre, en vue de dessus les dépôts de matériau adhésif réalisés sur l'épaulement 20 du corps de carte. Ces dépôts 60 sont régulièrement répartis sur les côtés d'un rectangle de dimensions L et l.

Il faut que la viscosité du matériau adhésif soit suffisante pour former les gouttes aux extrémités des tiges. De préférence la viscosité du matériau adhésif est supérieure à 100 centipoises. Des matériaux adhésifs particulièrement bien adaptés à la fixation du module électronique sur le corps de carte sont les cyano-acrylates. D'autres matériaux pourraient toutefois être utilisés. Le corps de carte peut être réalisé en ABS (corps de carte moulé) ou en PVC. Le circuit imprimé 22 peut être en epoxy ou en polyester.

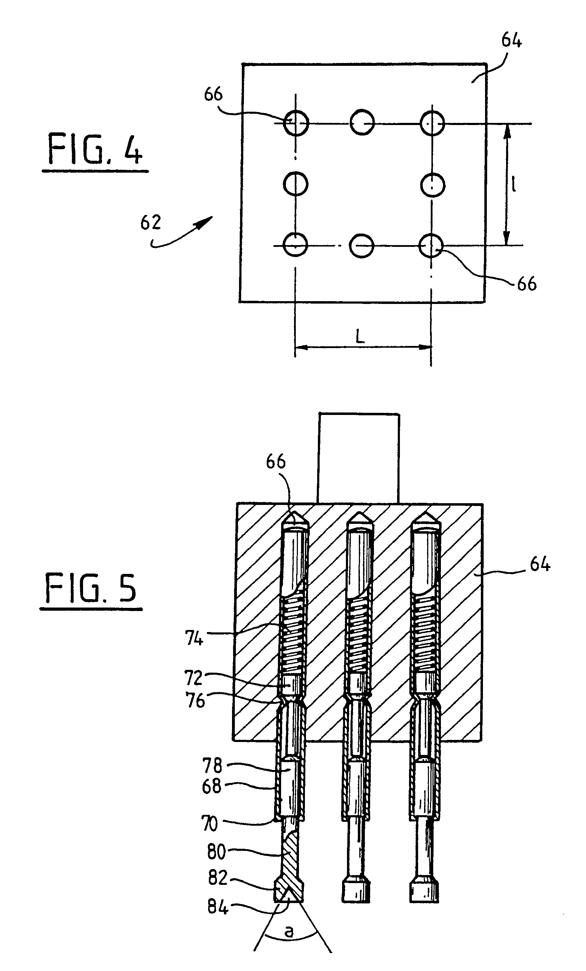

Les figures 4 et 5 montrent un deuxième mode de réalisation de l'outil de tamponnage qui porte la référence 62. Le corps 64 de l'outil est percé de huit évidements cylindriques 66 qui sont borgnes. Ils sont régulièrement disposés sur les côtés d'un rectangle de dimensions L et l. Dans chaque évidement 66 est serti un tube 68 ouvert à son extrémité 70. Dans chaque tube 68 est monté un poussoir 72. Le poussoir 72 est soumis à l'effet d'un système élastique 74 qui tend à appliquer le poussoir 72 contre une restriction 76 du tube. L'extrémité libre du poussoir 72 est appliquée contre la tête 78 d'une tige 80 qui peut coulisser dans le tube 68. L'extrémité 82 de la tige 80 fait saillie hors de l'extrémité ouverte du tube 70. L'extrémité 82 de la tige 80 est munie d'un évidement conique 84 d'angle au sommet a/2. Dans l'exemple décrit, l'angle a vaut 90°. Lorsque l'outil 62 est au repos les tiges 80 sont dans leur position d'extension maximale sous l'effet des ressorts 74 et des poussoirs 72. Lorsque les extrémités 82 des tiges 80 sont plongées dans le récipient 40 contenant l'adhésif 42, puis extraites de celui-ci, il se forme par capillarité, des gouttes de matériau adhésif dans les évidements 84 des tiges 70. Lorsque les extrémités 82 des tiges 80 sont appliquées sur l'épaulement 20 du corps de carte, l'action des systèmes élastiques 74 assure un contact effectif entre l'épaulement 20 et l'extrémité de chacune des tiges. Lorsqu'on écarte progressivement l'outil 62 du corps de carte, la goutte de matériau adhésif est transférée, par différence de tensions supeficielles, de la tige vers l'épaulement du corps de carte où elle demeure. La forme évidée 84 de l'extrémité de chaque tige permet un contrôle plus précis du volume de la goutte se formant à l'extrémité de chaque tige.

## Revendications

1. Procédé de fabrication d'une carte à mémoire électronique caractérisé en ce qu'il comprend les étapes suivantes :

On fournit un corps de carte présentant une cavité pour recevoir un module électronique,
On fournit un outil de tamponnage présentant au moins une tige se terminant par une extrémité libre;
On plonge temporairement l'extrémité de ladite tige dans un matériau adhésif présentant une viscosité suffisante et on retire ladite extrémité de telle manière que du matériau adhésif reste sur ladite extrémité par tension superficielle,
On applique l'extrémité de ladite tige sur une partie convenable de la paroi de ladite cavité pour que le matériau adhésif passe de ladite extrémité à ladite paroi,

On fournit un module électronique présentant une face externe et une face interne comportant une zone de fixation,

On place ledit module dans ladite cavité pour que ladite zone de fixation soit en regard dudit matériau adhésif.

2. Procédé selon la revendication 1, caractérisé en ce que ledit outil de tamponage comprend une pluralité de tiges dont les extrémités sont disposées selon une ligne fermée dont la forme correspond à celle de la portion du corps de carte sur laquelle le module électronique doit être fixé.

3. Procédé selon la revendication 2, caractérisé ence que l'extrémité de chaque tige a la forme d'une pointe.

4. Procédé selon la revendication 2, caractérisé en ce que l'extrémité de chaque tige est munie d'un évidement en forme de cône.

5. Procédé selon l'une quelconque des revendications 2 à 4, caractérisé en ce que chaque tige est montée sur le corps de l'outil de tamponage par l'intermédiaire d'un système élastique.

# FIG.1

# FIG.2

# FIG.3

# FIG.6

FIG. 4

FIG. 5

Office européen
des brevets

**RAPPORT DE RECHERCHE EUROPEENNE**

Numero de la demande

EP 91 40 0669

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 613 510 (FLONIC)<br>* figures 4,5 *<br>--- | 1 | G 06 K 19/077<br>H 01 L 23/498 |
| A | EP-A-0 334 733 (SCHLUMBERGER IND.)<br>* abrégé; figure 3 *<br>--- | 1 | |
| A | EP-A-0 197 847 (FLONIC)<br>* abrégé; figure 11 *<br>--- | 1 | |
| A | GB-A-2 205 683 (CASIO COMPUTER)<br>* page 41, ligne 22 - page 43, ligne 3;<br>figures 27A-28 *<br>--- | 1,2 | |
| A | EP-A-0 160 222 (ALLIED CORP.)<br>* page 14, ligne 12 - page 15, ligne<br>20; figure 2 *<br>----- | 2,5 | |
| | | | **DOMAINES TECHNIQUES RECHERCHES (Int. Cl.5)**<br><br>G 06 K 19/00<br>H 01 L 21/00<br>H 01 L 23/00 |

Le présent rapport a été établi pour toutes les revendications

| Lieu de la recherche | Date d'achèvement de la recherche | Examinateur |
|---|---|---|
| BERLIN | 07-05-1991 | DUCREAU F B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)

7